# FASCICULE DE BREVET EUROPEEN

(11) **EP 1 948 499 B1**
(45) Date de publication et mention de la délivrance du brevet: **02.12.2009**
(21) Numéro de dépôt: 06831053.1
(22) Date de dépôt: 02.11.2006
(51) Int. Cl.: B62D 65/06, B60J 5/04

(54) **DISPOSITIF D'ECARTEMENT SECURISE A L'ARRACHEMENT**
GEGEN EXTRAKTION GESICHERTE ABSTANDSVORRICHTUNG
SPACING DEVICE SECURED AGAINST EXTRACTION

(30) Priorité: 15.11.2005 FR 0511542
(43) Date de publication de la demande: 30.07.2008
(73) Titulaire: Exsto, 26100 Romans sur Isère (FR)
(72) Inventeur: PERCHE, Stéphane, F-26260 Saint Bardoux (FR)
(74) Mandataire: Chevalier, Renaud Philippe
(86) Numéro de dépôt international: PCT/FR2006/002448
(87) Numéro de publication internationale: WO 2007/057532

(56) Documents cités:
- WO-A-2005/095135
- FR-A- 2 833 562

## Description

La présente invention se rapporte à un dispositif d'écartement provisoire destiné à être intercalé entre un élément ouvrant et un élément fixe d'une carrosserie d'un véhicule automobile. La publication WO-A-2005/095135 divulgue un dispositif d'écartement d'après le préambule de la revendication 1.

Avant le rattachement définitif d'un élément ouvrant, tel qu'une porte, un capot, ou un hayon, entre autres, sur un élément fixe d'une carrosserie d'un véhicule automobile, il est généralement procédé à des étapes d'application d'un ou plusieurs revêtements, tels que des revêtements de protection ou l'application d'une couche de peinture. Lors de tels traitements, ces éléments ouvrants ne sont pas encore équipés de dispositifs de fermeture définitifs, comme des serrures.

Pour cette raison, il est prévu des dispositifs d'écartement et de verrouillage provisoire qui permettent de maintenir un élément ouvrant dans une position pseudo-fermée par rapport à l'élément fixe auquel il doit être rattaché.

Les documents FR 2 833 562 et EP 0 931 895 décrivent chacun un dispositif de ce type comprenant, d'une part, une platine de fixation destinée à permettre l'ancrage du dispositif dans l'élément fixe, et d'autre part, un corps rattaché à la platine de fixation et formant une butée apte à servir d'appui à l'élément ouvrant.

Dans un dispositif selon le document FR 2 833 562, la platine de fixation est immobilisée dans la carrosserie, à l'aide d'un pion destiné à pénétrer dans un orifice de la carrosserie et d'une vis destinée à traverser un orifice de la platine de fixation pour venir se fixer dans un orifice taraudé de la carrosserie.

Dans un dispositif selon le document EP 0 931 895, l'ancrage de la platine de fixation s'effectue par l'intermédiaire d'au moins un orifice taraudé ménagé dans la carrosserie et destiné à recevoir chacun un pion solidaire de la platine de fixation. Un tel pion est muni d'ailettes périphériques aptes à coopérer avec l'orifice taraudé correspondant lorsqu'un opérateur exerce une pression sur le dispositif d'écartement provisoire. Eventuellement, une vis peut être utilisée comme moyen de fixation complémentaire. L'avantage d'un tel mode de fixation est qu'il ne nécessite aucun outil lors du montage du dispositif de maintien. Toutefois, lorsque les contraintes à supporter sont trop élevées, il convient d'y adjoindre une vis qui, elle, nécessite un outil pour sa mise en place.

Néanmoins, ces deux systèmes de fixation montrent des limites pour supporter de lourdes charges ou des chocs répétés, les moyens de fixation pouvant transmettre des efforts importants sur la structure fixe, et par conséquent endommager la tôle de la carrosserie si les efforts subits sont trop élevés, les dommages pouvant aller jusqu'à l'arrachage des moyens de fixation.

La présente invention a pour but de pallier l'inconvénient précédemment évoqué et consiste pour cela en un dispositif d'écartement provisoire d'un élément ouvrant sur un élément fixe d'une carrosserie d'un véhicule automobile, comprenant, d'une part, une platine de fixation, et d'autre part, un élément de butée apte à servir d'appui à l'élément ouvrant, caractérisé en ce que la platine de fixation est conçue de manière à venir en prise avec une paroi de l'élément fixe en bloquant le dispositif d'écartement selon au moins une direction, et en ce que ledit dispositif possède au moins un deuxième point de fixation situé à distance de la platine de fixation et conçu de manière à venir également en prise avec une paroi de l'élément fixe en opérant un maintien au moins dans la ou les directions complémentaires.

Par élément ouvrant, il convient d'entendre toute partie de carrosserie, telle qu'une portière, un capot, un hayon, qui est mobile par rapport à la carrosserie du véhicule automobile.

Ainsi, le fait de prévoir un deuxième point d'ancrage déporté permet une meilleure répartition des efforts s'exerçant sur l'élément de butée. De cette manière, les contraintes supportées par les moyens de fixation sont diminuées, ce qui permet de plus d'utiliser des moyens de fixation moins massifs et donc moins coûteux à fabriquer.

Le deuxième point d'ancrage assure un complément de fixation dans le cas où la platine de fixation est conçue pour ne maintenir le dispositif d'écartement que selon une ou deux directions, le maintien dans la ou les directions manquantes pour assurer une bonne tenue étant apporté par le deuxième point de fixation.

Bien que ce deuxième point de fixation ne soit pas strictement nécessaire au maintien du dispositif dans le cas d'une fixation de la platine de fixation à l'aide de vis assurant une fixation théoriquement suffisante dans les trois directions, il permet toutefois d'assurer une meilleure répartition des efforts. Dans un tel cas, on pourra alors utiliser des vis de diamètre plus faible et donc présentant un coût de revient moindre tout en assurant une meilleure résistance aux contraintes grâce à la répartition des efforts sur plusieurs zones d'ancrage.

Avantageusement, le deuxième point de fixation est conçu de façon à venir au niveau d'une arête de la structure fixe.

Selon un premier mode de réalisation préféré de l'invention, le deuxième point de fixation forme une fente dans laquelle peut être introduite l'arête de la structure fixe, ladite fente étant réalisée à partir d'une partie fixe à laquelle est rattachée une patte de retenue élastiquement déformable. Un tel mode de réalisation ne nécessite pas d'orifice correspondant ménagé dans une paroi de la structure fixe, et est particulièrement facile à mettre en place et à retirer grâce à la patte de retenue élastique par simple écartement de celle ci.

Selon un deuxième mode de réalisation, le deuxième point de fixation comprend au moins un moyen de fixation destiné à coopérer avec un orifice correspondant de la structure fixe. Avantageusement, au moins un moyen de fixation est clipsable. Bien évidemment, on pourra utiliser en variante tout moyen de fixation usuel tel qu'une vis, mais encore une agrafe sapin, ou encore des aimants, par exemple.

De manière préférentielle, la platine de fixation est équipée de moyens de maintien aptes à coopérer par emboîtement avec des ouvertures correspondantes de la structure fixe. Une fixation par simple emboîtement permet de mettre en place le dispositif d'écartement selon l'invention sans utiliser d'outils, le maintien complémentaire nécessaire pour stabiliser l'emboîtement étant assuré par le deuxième point de fixation.

Avantageusement, les moyens de fixation de la platine de fixation comprennent au moins un organe de retenue formant bec. Avantageusement encore, les moyens de fixation sont complétés par au moins un doigt de positionnement.

En variante, les moyens de fixation prévus pourront être clipsables.

De manière avantageuse, l'élément de butée est conçu de manière à pouvoir être logé entre l'élément fixe et l'élément ouvrant. Ainsi l'élément de butée peut entrer au contact de l'élément ouvrant par l'intermédiaire d'une zone masquée, destinée à être recouverte par un élément d'habillage intérieur du véhicule et ne gênera donc pas la peinture en laissant une marque sur une zone non peinte.

Préférentiellement, le dispositif est monobloc. Avantageusement, le dispositif selon l'invention est réalisé à partir d'un matériau thermoplastique apte à supporter une température au moins égale à 180°C.

La mise en oeuvre de l'invention sera mieux comprise à l'aide de la description détaillée qui est exposée ci-dessous en regard du dessin annexé dans lequel:
La figure 1 est une représentation en perspective d'un premier mode de réalisation d'un dispositif d'écartement selon l'invention destiné à maintenir une portière dans une position pseudo-fermée par rapport à une carrosserie d'automobile.
La figure 2 est une vue du dispositif d'écartement de la figure 1 mis en place sur la carrosserie d'automobile.
La figure 3 est une vue rapprochée de face du dispositif d'écartement représenté à la figure 2.
La figure 4 est une vue rapprochée de derrière du dispositif d'écartement représenté à la figure 2.
La figure 5 est une représentation schématique en coupe longitudinale du dispositif de la figure 1 mis en place entre une portière et la carrosserie d'automobile.
La figure 6 est une représentation en perspective partielle d'un dispositif d'écartement selon un deuxième mode de réalisation de l'invention.
La figure 7 est une vue de côté d'un autre mode de réalisation d'un dispositif d'écartement selon l'invention destiné à maintenir un hayon dans une position pseudo-fermée par rapport à la carrosserie.
La figure 8 est une représentation en perspective du dispositif d'écartement de la figure 7 mis en place sur la carrosserie pour maintenir un hayon d'un véhicule automobile.

Dans la description qui suit, les mêmes éléments pour les différents modes de réalisation portent la même référence.

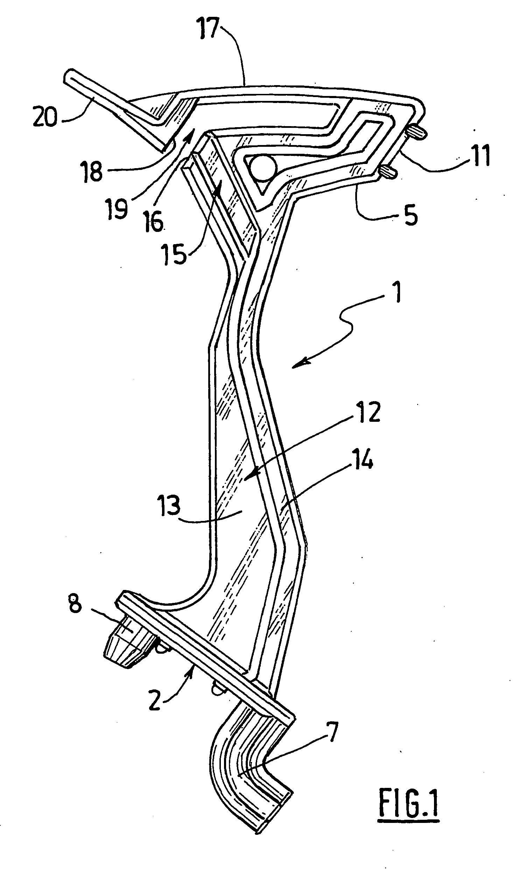

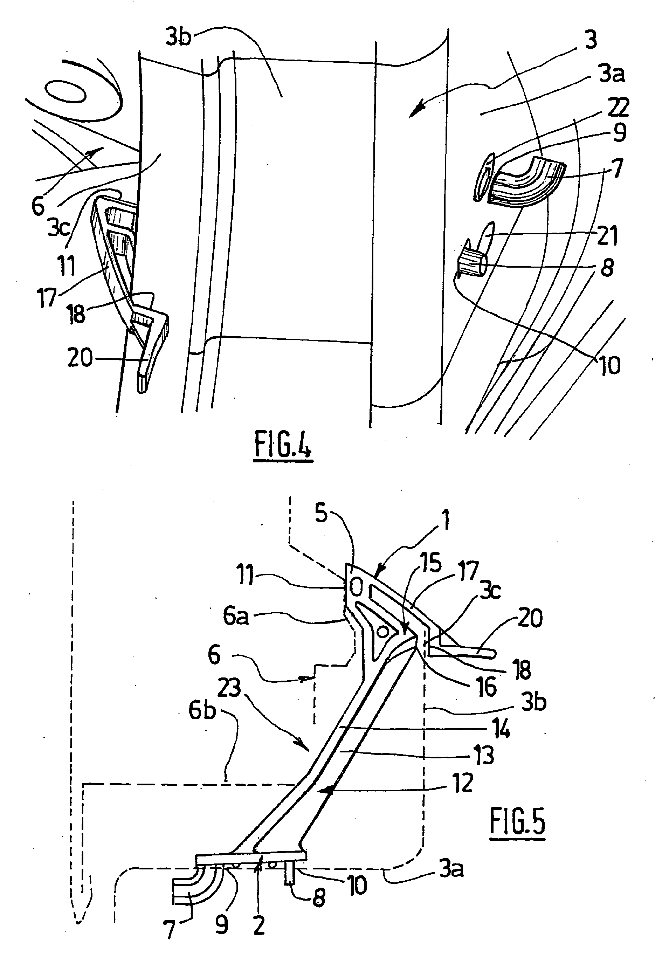

Un dispositif d'écartement 1 provisoire selon l'invention, tel que représenté sur les figures 1 à 5, comprend un corps monobloc conçu à partir d'un matériau thermoplastique mis en forme, se décomposant, d'une part, en une platine de fixation 2 destinée à permettre l'ancrage temporaire du dispositif d'écartement dans une paroi 3a d'un élément fixe 3 d'une carrosserie 4 d'un véhicule automobile, et d'autre part, en un élément de butée 5 destiné à servir d'appui à un élément ouvrant, en l'espèce une portière 6.

La platine de fixation 2 est équipée de moyens d'attache comprenant, d'une part, un organe de retenue présentant une extrémité recourbée formant un bec 7, et d'autre part, un doigt de positionnement 8, destinés chacun à être insérés dans un orifice 9, 10 correspondant de la paroi 3a de l'élément fixe 3. II s'agit donc d'un système de fixation sans vis par emboîtement de la platine de fixation. Alternativement, on pourra prévoir un système de fixation clipsable au moyen de crochets amovibles clipsables ou d'un doigt de positionnement clipsable par exemple.

L'élément de butée 5 est réalisé sous la forme d'une protubérance rigide présentant une surface de contact 11 destinée à venir au contact d'une paroi de la portière 6 et est rattaché à la platine de fixation 2 à l'aide d'une partie intermédiaire 12 présentant une forme générale en queue de scorpion.

Plus précisément, la partie intermédiaire 12 et l'élément de butée 5 sont conformés de manière à ménager un espace apte à recevoir un rebord 6a de l'élément ouvrant 6, l'élément de butée 5 étant ainsi apte à venir au contact de la portière 6 sur une zone non visible de celle-ci.

La partie intermédiaire 12 est réalisée sous la forme d'une âme 13 contenue dans un plan perpendiculaire à la platine de fixation 2, et d'un rebord raidisseur 14, perpendiculaire et transversal à la platine de fixation 2, s'étendant continûment selon une bordure de l'âme 13.

Potentialité : La partie intermédiaire 12 confère à l'élément de butée 5 une certaine flexibilité permettant au dispositif d'écartement 1 d'absorber dans une certaine mesure d'éventuels chocs contre la portière 6. La flexibilité peut être due au matériau utilisé et/ou à l'épaisseur de celui-ci, et/ou à la forme du rebord raidisseur 14 par rapport à l'âme 13.

Par ailleurs, le dispositif d'écartement 1 comporte un deuxième point de fixation 15 situé à distance de la platine de fixation 2 et destiné à venir en prise avec une deuxième paroi 3b de l'élément fixe 3 sensiblement perpendiculaire à la paroi 3a.

Pour ce faire, l'élément de butée 5 présente, d'une part, une deuxième surface de contact 16, orientée à l'opposé de la surface de contact 11 destinée à venir au contact de la portière 6, et d'autre part, une patte de retenue 17 rattachée élastiquement par une première extrémité à une partie fixe de l'élément de butée 5 et présentant une deuxième extrémité formant une paroi de contact 18 sensiblement parallèle à la deuxième surface de contact 16. La patte de retenue 17 et la deuxième surface de contact 16 forment ensemble une fente 19 destinée à recevoir un rebord 3c de la paroi 3b de l'élément fixe 3, ce rebord étant communément appelé feuillure. La patte de retenue 17 est prolongée par une languette de préhension 20 destinée à faciliter sa manipulation. Il convient de noter que la patte de retenue 17 doit être suffisamment longue pour retenir la feuillure et présenter une paroi contre laquelle la feuillure vient buter afin d'empêcher tout sortie intempestive de celle-ci sans écartement volontaire de la patte de retenue 17 à l'aide de la languette de préhension.

Un utilisateur souhaitant positionner une portière 6 dans une position d'écartement proche de sa position de fermeture par rapport à un élément fixe 3 d'une carrosserie d'un véhicule automobile à l'aide d'un dispositif d'écartement 1 selon l'invention, procédera de la façon suivante.

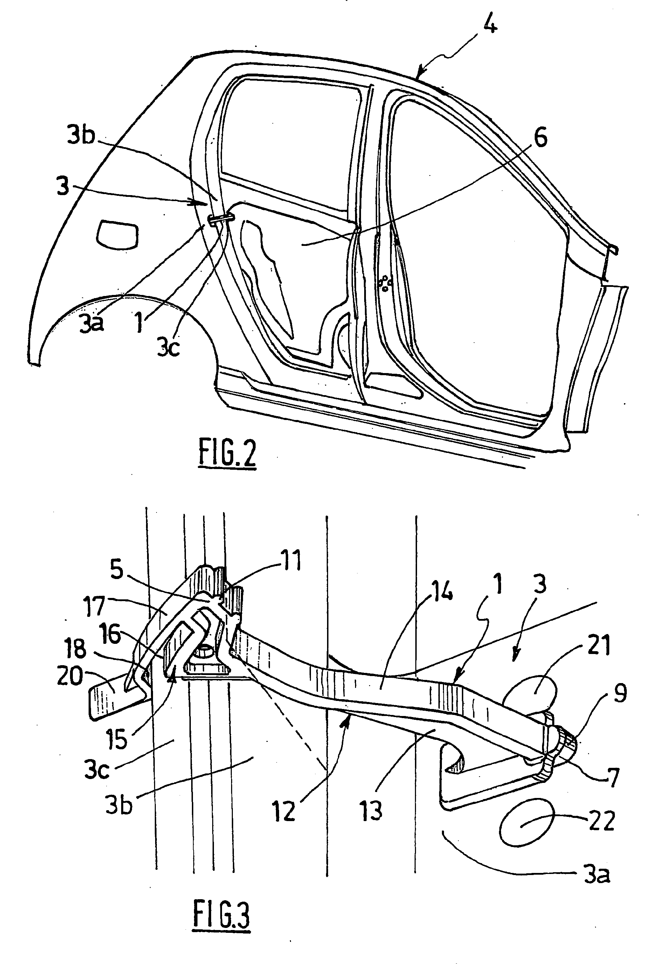

Initialement, l'élément fixe 3 de la carrosserie est mis en place sur une chaîne de montage le long de laquelle il progresse afin de subir diverses opérations d'assemblage. Cet élément fixe 3 présente des ouvertures destinées à recevoir des éléments ouvrants, tels que des portières 6, hayon ou capots, entre autres. Ces ouvertures définissent chacune, par rapport à l'élément fixe 3 de carrosserie, un plan, sensiblement vertical dans le cas de la portière, dans lequel se trouve la direction d'articulation. Un tel élément fixe est représenté sur la figure 2.

Au cours de ces opérations d'assemblage, les portières 6 et autres éléments ouvrants sont montés sur l'élément fixe 3 à l'aide de charnières adaptées. Toutefois, ces éléments ouvrants ne sont pas encore équipés des dispositifs de fermeture et serrures définitives. Lorsque la carrosserie est prête à recevoir une application de peinture ou d'un revêtement de protection, les éléments ouvrants doivent être placés dans une position proche de leur position de fermeture, ou position de pseudo-fermeture, de manière à revêtir toutes les parties externes de la carrosserie.

Ces éléments ouvrants sont maintenus écartés de la structure fixe 3 dans cette position à l'aide du dispositif d'écartement 1 selon l'invention.

Plus précisément, le dispositif d'écartement 1 est prévu pour être fixé temporairement sur l'élément fixe 3, dans le volume qu'occupera la serrure de la portière 6, comprenant des points de fixation 21, 22 d'une gâche sur l'élément fixe 3 et un logement 23 correspondant prévu dans la portière 6 pour ladite serrure. Ce logement 23 est formé par une découpe réalisée sur une face interne de l'élément ouvrant et comporte un rebord 6b s'étendant perpendiculairement au plan de l'élément ouvrant et un rebord 6a s'étendant parallèlement au plan de l'élément ouvrant, c'est-à-dire à la paroi 3b.

Pour ce faire, l'extrémité recourbée du bec 7 de la platine de fixation 2 est introduite dans l'orifice 9 correspondant de la paroi 3a de la structure fixe 3 puis le dispositif d'écartement 1 est animé d'un mouvement de rotation permettant d'amener l'extrémité recourbée du bec 7 en prise avec la paroi 3a, position dans laquelle le doigt de positionnement 8 est alors inséré dans l'ouverture 10 qui lui est dédié. Le bec 7 et le doigt de positionnement 8 permettent un maintien dans le plan de l'élément fixe 3, toutefois une légère rotation du dispositif dans un plan perpendiculaire au plan de l'élément fixe permet de facilement désengager les moyens de retenue que constituent le bec 7 et le doigt de positionnement 8. Une fixation complémentaire doit dont être apportée par le deuxième point de fixation 15. Bien évidemment, il est également possible d'utiliser une fixation par vis, bien qu'une telle fixation ait l'inconvénient de nécessiter des outils. Dans ce cas, on utilisera des orifices taraudés 21, 22 prévus pour la serrure définitive. Dans un tel cas également, le deuxième point de fixation 15 fournit un point d'ancrage supplémentaire permettant une meilleure répartition des efforts.

Grâce à la languette de préhension 20, l'opérateur écarte la patte de retenue 17 élastique de manière à permettre le passage de la feuillure 3a jusqu'à ce que celle-ci entre en contact avec la deuxième surface de contact 16. La languette de préhension 20 est alors relâchée et la patte de retenue 17 revient dans sa position de repos dans laquelle elle forme, avec la deuxième surface de contact 16, une fente abritant la feuillure 3c et bloquant tout écartement de celle-ci. Un mouvement de rotation, qui permettrait de désengager le bec 7 et le doigt de positionnement 8 est donc empêché.

Le dispositif d'écartement 1 ainsi mis en place, la portière 6 est alors amené dans sa position pseudo-fermée de manière à ce qu'elle vienne en appui sur la surface de contact 11 de l'élément de butée 5.

Une fois le revêtement ou la peinture appliqué, les dispositifs d'écartement 1 sont retirés et les dispositifs de fermeture définitifs ainsi que les serrures peuvent être installés.

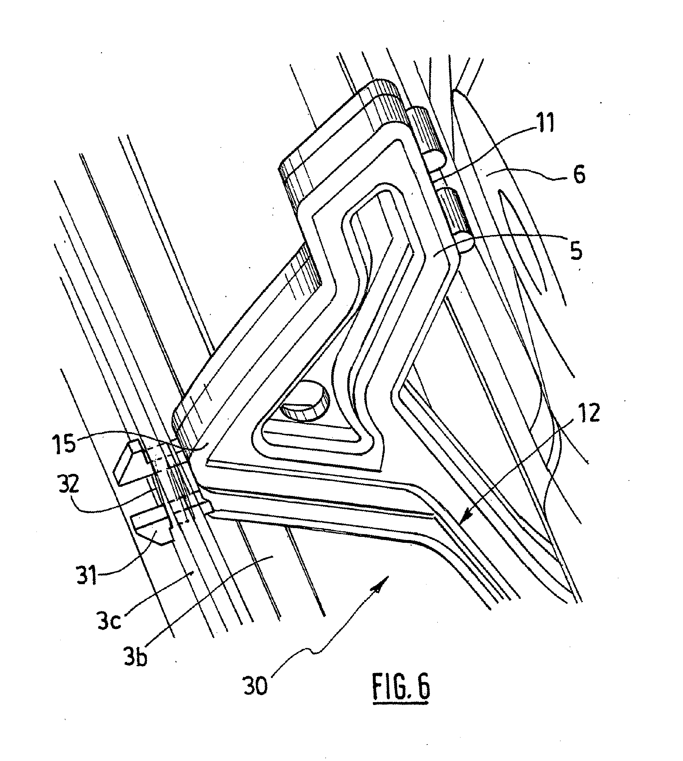

La figure 6 présente un deuxième mode de réalisation d'un dispositif d'écartement 30 selon l'invention. Ce dispositif d'écartement 30 diffère du dispositif d'écartement 1 précédemment décrit uniquement par le fait que le deuxième point de fixation est réalisé sous la forme d'un clip 31 solidaire de l'élément de butée 5 et destiné à coopérer avec un orifice 32 correspondant de l'élément fixe 3. Une autre variante de réalisation réside dans l'utilisation d'une vis destinée à coopérer avec un alésage taraudé de la paroi 3b.

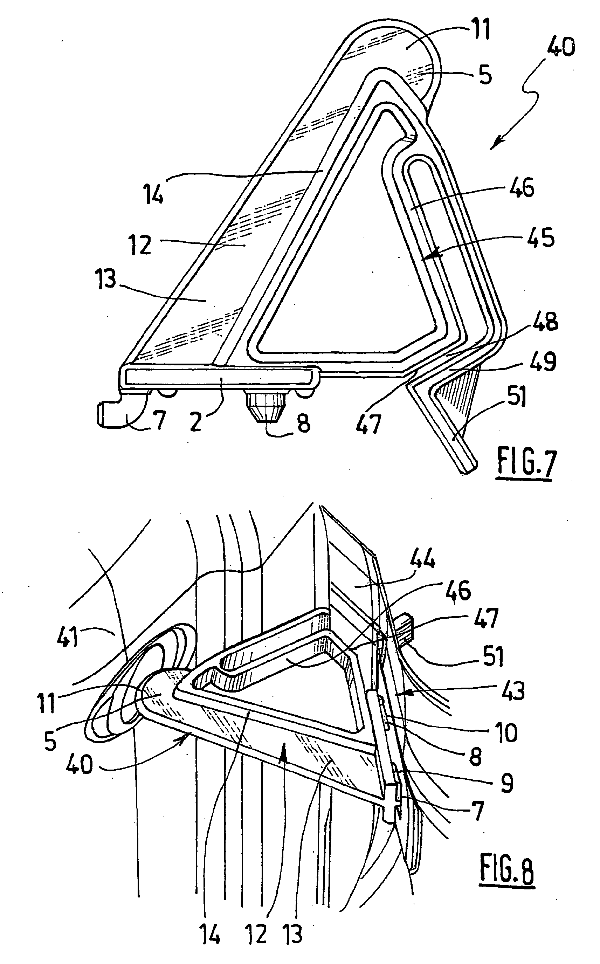

Les figures 7 et 8 présentent un dispositif d'écartement 40 selon l'invention conçu pour le maintien d'un hayon 41 sur une carrosserie d'automobile.

La carrosserie d'automobile présente une paroi 43 continue présentant une extrémité 44 recourbée.

Un tel dispositif d'écartement 40 diffère du dispositif d'écartement précédemment décrit en ce qu'il comprend un deuxième point de fixation 45 réalisé sous la forme d'une équerre 46 située entre l'élément de butée 5 et la platine de fixation 2 et présentant une surface de contact 47 destinée à venir au contact de l'extrémité 44 recourbée de la paroi 43 de la structure fixe, cette surface de contact 47 formant une fente 48 avec une patte de retenue 49 rigide reliée élastiquement à l'équerre 46. Une languette de préhension 51 équipe la patte de retenue 49. Comme pour le dispositif d'écartement 1 précédemment décrit, le dispositif d'écartement 40 est mis en place à l'aide de la platine de fixation 2 comme décrit précédemment puis est maintenu grâce au deuxième point de fixation 45 venant en prise avec l'extrémité 44 recourbée de la paroi 43 grâce à la fente 48 formée par la patte de retenue 49 et la surface de contact 47 de l'équerre 46. Le deuxième point de fixation 45 est fixé comme pour le dispositif d'écartement en écartant la patte de retenue 49 élastique à l'aide de la languette de préhension 51.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif d'écartement (1, 30, 40) provisoire d'un élément ouvrant (6, 41) sur un élément fixe (3, 43) d'une carrosserie d'un véhicule automobile, comprenant, d'une part, une platine de fixation (2), et d'autre part, un élément de butée (5) apte à servir d'appui à l'élément ouvrant, **caractérisé en ce que** la platine de fixation est conçue de manière à venir en prise avec une paroi (3a, 43) de l'élément fixe en bloquant le dispositif d'écartement selon au moins une direction, et **en ce que** ledit dispositif possède au moins un deuxième point de fixation (15, 45) situé à distance de la platine de fixation et conçu de manière à venir également en prise avec une paroi (3b, 44) de l'élément fixe en opérant un maintien au moins dans la ou les directions complémentaires.

2. Dispositif d'écartement (1, 30, 40) provisoire selon la revendication 1, **caractérisé en ce que** le deuxième point de fixation est conçu de façon à venir au niveau d'une arête (3c, 44) de la structure fixe (3).

3. Dispositif d'écartement (1, 40) provisoire selon la revendication 2, **caractérisé en ce que** le deuxième point de fixation (15, 45) forme une fente (19, 48) dans laquelle peut être introduite l'arête de la structure fixe, ladite fente étant réalisée à partir d'une partie fixe à laquelle est rattachée une patte de retenue élastiquement déformable.

4. Dispositif d'écartement (30) provisoire selon l'une quelconque des revendications 1 à 3, **caractérisé en ce que** le deuxième point de fixation (15) comprend au moins un moyen de fixation (31) destiné à coopérer avec un orifice (32) correspondant de la structure fixe.

5. Dispositif d'écartement provisoire selon la revendication 4, **caractérisé en ce que** au moins un moyen de fixation est clipsable.

6. Dispositif d'écartement (1, 30, 40) provisoire selon l'une quelconque des revendications 1 à 5, **caractérisé en ce que** la platine de fixation (2) est équipée de moyens de maintien (7, 8) aptes à coopérer par emboîtement avec des ouvertures (9, 10) correspondantes de la structure fixe (3).

7. Dispositif d'écartement (1, 30, 40) provisoire selon la revendication 6, **caractérisé en ce que** les moyens de fixation de la platine de fixation comprennent au moins un organe de retenue formant bec (7).

8. Dispositif d'écartement (1, 30, 40) provisoire selon la revendication 7, **caractérisé en ce que** les moyens de fixation (7) sont complétés par au moins un doigt de positionnement (8).

9. Dispositif d'écartement (1, 30, 40) provisoire selon l'une quelconque des revendications 1 à 8, **caractérisé en ce que** l'élément de butée (5) est conçu de manière à pouvoir être logé entre l'élément fixe (3, 43) et l'élément ouvrant (6, 41).

10. Dispositif d'écartement (1, 30, 40) provisoire selon l'une quelconque des revendications 1 à 9 **caractérisé en ce qu'**il est monobloc.

## Claims

1. Temporary spacing device (1, 30, 40) for an opening element (6, 41) on a fixed element (3, 43) of a motor vehicle bodywork, comprising, on the one hand, a mounting plate (2) and, on the other hand, an abutment element (5) against which the opening element can rest, **characterized in that** the mounting plate is designed to engage with a wall (3a, 43) of the fixed element, thereby immobilizing the spacing device in at least one direction, and **in that** the said device has at least one second mounting point (15, 45) situated some distance from the mounting plate and designed likewise to engage with a wall (3b, 44) of the fixed element, thereby providing retention in at least the complementary direction or directions.

2. Temporary spacing device (1, 30, 40) according to Claim 1, **characterized in that** the second mounting point is designed to lie level with an edge corner (3c, 44) of the fixed structure (3).

3. Temporary spacing device (1, 40) according to Claim 2, **characterized in that** the second mounting point (15, 45) forms a slot (19, 48) into which the edge corner of the fixed structure can be inserted, the said slot being created from a fixed part to which an elastically deformable retaining tab is attached.

4. Temporary spacing device (30) according to any one of Claims 1 to 3, **characterized in that** the second mounting point (15) comprises at least one mounting means (31) intended to collaborate with a corresponding hole (32) in the fixed structure.

5. Temporary spacing device according to Claim 4, **characterized in that** at least one mounting means can be clipped into position.

6. Temporary spacing device (1, 30, 40) according to any one of Claims 1 to 5, **characterized in that** the mounting plate (2) is equipped with retaining means (7, 8) able to collaborate by nesting with corresponding openings (9, 10) in the fixed structure (3).

7. Temporary spacing device (1, 30, 40) according to Claim 6, **characterized in that** the mounting means of the mounting plate comprise at least one nib-forming retaining member (7).

8. Temporary spacing device (1, 30, 40) according to Claim 7, **characterized in that** the mounting means (7) are supplemented by at least one positioning finger (8).

9. Temporary spacing device (1, 30, 40) according to any one of Claims 1 to 8, **characterized in that** the abutment element (5) is designed so that it can be lodged between the fixed element (3, 43) and the opening element (6, 41).

10. Temporary spacing device (1, 30, 40) according to any one of Claims 1 to 9, **characterized in that** it is made as one piece.

## Patentansprüche

1. Vorrichtung (1, 30, 40) zur vorübergehenden Beabstandung eines Öffnungselements (6, 41) an einem feststehenden Element (3, 43) einer Karosserie eines Kraftfahrzeugs mit einerseits einer Befestigungsplatte (2) und andererseits einem Anschlagelement (5), das geeignet ist, als Anlage am Öffnungselement zu dienen, **dadurch gekennzeichnet, dass** die Befestigungsplatte so ausgelegt ist, dass sie mit einer Wand (3a, 43) des feststehenden Elements in Eingriff kommt, wodurch sie die Beabstandungsvorrichtung in mindestens einer Richtung blockiert und dass die Vorrichtung mindestens eine zweite Befestigungsstelle (15, 45) besitzt, die beabstandet von der Befestigungsplatte angeordnet und so ausgelegt ist, dass sie ebenfalls mit einer Wand (3b, 44) des feststehenden Elements in Eingriff kommt und **dadurch** in mindestens der oder den komplementären Richtung/en für Halt sorgt.

2. Vorrichtung (1, 30, 40) zur vorübergehenden Beabstandung nach Anspruch 1, **dadurch gekennzeichnet, dass** die zweite Befestigungsstelle so ausgelegt ist, dass sie auf der Höhe einer Kante (3c, 44) der feststehenden Struktur (3) zu liegen kommt.

3. Vorrichtung (1, 40) zur vorübergehenden Beabstandung nach Anspruch 2, **dadurch gekennzeichnet, dass** die zweite Befestigungsstelle (15, 45) einen Schlitz (19, 48) bildet, in den die Kante der feststehenden Struktur eingeführt werden kann, wobei der Schlitz ausgehend von einem feststehenden Teil hergestellt wird, an den eine elastisch deformierbare Rückhalteklemme angebracht ist.

4. Vorrichtung (30) zur vorübergehenden Beabstandung nach einem der Ansprüche 1 bis 3, **dadurch gekennzeichnet, dass** die zweite Befestigungsstelle (15) mindestens ein Befestigungsmittel (31) umfasst, das dazu bestimmt ist, mit einer der feststehenden Struktur entsprechenden Öffnung (32) zusammenzuwirken.

5. Vorrichtung zur vorübergehenden Beabstandung nach Anspruch 4, **dadurch gekennzeichnet, dass** mindestens ein Befestigungsmittel eingerastet werden kann.

6. Vorrichtung (1, 30, 40) zur vorübergehenden Beabstandung nach einem der Ansprüche 1 bis 5, **dadurch gekennzeichnet, dass** die Befestigungsplatte (2) mit Haltemitteln (7, 8) ausgerüstet ist, die geeignet sind, mit der feststehenden Struktur (3) entsprechenden Öffnungen (9, 10) durch Eingreifen zusammenzuwirken.

7. Vorrichtung (1, 30, 40) zur vorübergehenden Beabstandung nach Anspruch 6, **dadurch gekennzeichnet, dass** die Befestigungsmittel der Befestigungsplatte mindestens ein die Nase (7) bildendes Rückhalteelement umfassen.

8. Vorrichtung (1, 30, 40) zur vorübergehenden Beabstandung nach Anspruch 7, **dadurch gekennzeichnet, dass** die Befestigungsmittel (7) durch mindestens einen Positionierungsfinger (8) vervollständigt werden.

9. Vorrichtung (1, 30, 40) zur vorübergehenden Beabstandung nach einem der Ansprüche 1 bis 8, **dadurch gekennzeichnet, dass** das Anschlagelement (5) so ausgelegt ist, dass es zwischen dem feststehenden Element (3, 43) und dem Öffnungselement (6, 41) untergebracht werden kann.

10. Vorrichtung (1, 30, 40) zur vorübergehenden Beabstandung nach einem der Ansprüche 1 bis 9, **dadurch gekennzeichnet, dass** es einteilig ist.
